# EUROPÄISCHE PATENTSCHRIFT

(11) **EP 0 842 075 B1**
(45) Veröffentlichungstag und Bekanntmachung des Hinweises auf die Patenterteilung: **28.04.1999**
(21) Anmeldenummer: 96929288.7
(22) Anmeldetag: 20.08.1996
(51) Int. Cl.: B60T 15/42

(54) **STEUEREINRICHTUNG FÜR EINE DRUCKLUFTBREMSE**
CONTROLLER FOR A COMPRESSED-AIR BRAKE
DISPOSITIF DE COMMANDE DE FREIN A AIR COMPRIME

(30) Priorität: 21.08.1995 DE 19530667
(43) Veröffentlichungstag der Anmeldung: 20.05.1998
(73) Patentinhaber: Motzener Strasse 25 Grundstücks GmbH & Co. Besitz KG, D-12277 Berlin (DE)
(72) Erfinder: INOZEMTSEV, Vladimir, Moskau, 129224 (RU)
(74) Vertreter: Beetz & Partner Patentanwälte
(86) Internationale Anmeldenummer: EP9603663
(87) Internationale Veröffentlichungsnummer: WO9707004

(56) Entgegenhaltungen:
- EP-A- 0 017 260
- WO-A-81/01393
- GB-A- 2 103 739

## Beschreibung

Die Erfindung betrifft eine Steuereinrichtung zur Beschleunigung der Bremsvorgänge bei Druckluftbremsen, insbesondere von Schienenfahrzeugen.

Die Ansteuerung der Druckluftbremsen an den einzelnen Wagen eines Zuges erfolgt in der Regel durch Absenkung des Drucks in einer den gesamten Zug durchlaufenden Hauptluftleitung. Entsprechend der Druckabsenkung in der Hauptluftleitung baut sich der Bremszylinderdruck auf. Da sich beim Öffnen eines Führerbremsventils der Druck in der Hauptluftleitung am Zuganfang erheblich schneller als am Zugende abbaut, treten insbesondere bei langen Zügen erhebliche Bremskraftunterschiede auf, die zu Zerrungen und Stößen innerhalb des Zuges führen. Durch den verzögerten Bremskraftaufbau erhöht sich auch der Bremsweg, was dazu führt, daß die Zuggeschwindigkeit reduziert werden muß, um den Zug innerhalb der zulässigen Bremsstrecke anzuhalten. Auch bei Teilbremsungen ist die verzögerte Bremskraftentwicklung von Nachteil, da eine notwendige Bremsung entsprechend frühzeitig begonnen werden muß, um an den Signalen oder sonstigen Punkten die erlaubten Geschwindigkeiten einhalten zu können. Diese Nachteile lassen sich zwar durch Verwendung einer elektrischen Ansteuerung beseitigen. Dies bedeutet aber neben den hierfür erforderlichen Verbindungen zwischen den einzelnen Wagen einen erheblichen Steuerungsaufwand.

GB-A-2 103 739 beschreibt eine Steuereinrichtung für eine Druckluftbremse.

Der Erfindung liegt die Aufgabe zugrunde, eine Steuereinrichtung zu schaffen, die unter Verwendung pneumatisch gesteuerter Bauelemente die vorgenannten Nachteile beseitigt und in bereits verwendete Druckluftbremsen eingebaut werden kann, ohne daß dabei eine Änderung an den jeweiligen Bremssteuerventilen vorgenommen werden muß.

Diese Aufgabe wird erfindungsgemäß durch eine Steuereinrichtung gelöst mit einem axial beweglichen, federbelasteten Steuerkolben, dessen Wirkflächen einerseits durch den Druck in einer mit einer Hauptluftleitung verbundenen Druckkammer und andererseits durch den Druck in einer mit der Druckkammer über eine Drossel verbundenen Steuerkammer beaufschlagbar sind, einem durch den Steuerkolben betätigbaren Ventil zur Steuerung der Befüllung der Steuerkammer unabhängig vom Druck in der Hauptluftleitung, einer durch den Steuerkolben betätigbaren Ventilanordnung zur Steuerung der Druckluftverbindung zwischen der Steuerkammer und einer durch ein Rückventil zur Hauptluftleitung hin absperrbaren Ventilkammer und einem durch den Steuerkolben betätigbaren Entlüftungsventil zur Entlüftung der Ventilkammer und der Hauptluftleitung über das Rückventil.

Die erfindungsgemäße Steuereinrichtung unterstützt bei Betriebs- und Schnellbremsungen durch zusätzliches Abzapfen von Druckluft aus der Hauptluftleitung deren Druckabsenkung und ermöglicht eine gleichmäßigere Bremsbetätigung über der Gesamtlänge eines Zuges mit verkürzten Bremswegen.

Ein Vorteil der Erfindung liegt in der beim Auffüllen des Steuerbehälters an der Fülldrossel konstantgehaltenen Druckdifferenz, die durch ein vom Steuerkolben betätigtes Ventil gesteuert wird. Dadurch wird eine vom Hauptleitungsdruck unabhängige Befüllung der Steuerkammer erreicht.

In einer zweckmäßigen Ausgestaltung ist das Ventil zur Steuerung der Befüllung der Steuerkammer zwischen einem mit der Hauptluftleitung verbundenen Ventilraum und der auf der einen Seite des Steuerkolbens liegenden Druckkammer angeordnet. Das Ventil wird durch einen zwischen dem Ventilraum und der Druckkammer vorgesehenen Ventilsitz und einen durch eine Druckfeder in Richtung des Ventilsitzes beaufschlagten Ventilteller gebildet, der innerhalb des Ventilraums an einer Kolbenstange des Steuerkolbens abgestützt ist.

In einer weiteren zweckmäßigen Ausgestaltung der Erfindung wird die Druckluftverbindung zwischen der Steuerkammer und der Ventilkammer über ein Ventil gesteuert, das zunächst die Steuerkammer mit der Ventilkammer über eine Düse verbindet. Erst wenn der Steuerkolben durch Anstieg der Druckdifferenz zwischen der Druckkammer und der Steuerkammer eine vorgegebene Axialverschiebung durchgeführt hat, öffnet ein weiteres Ventil, das die Düse überbrückt. Damit kann die Druckluft ungedüst in die Ventilkammer 11 strömen, so daß ein weiterer Anstieg der Druckdifferenz vermieden werden kann.

Gemäß einer zweckmäßigen Weiterbildung der Erfindung steuert das bei einer vorgegebenen Axialverschiebung des Steuerkolbens öffnende Ventil die Druckluftverbindung zwischen einem mit der Steuerkammer in Verbindung stehenden Innenraum im Inneren des Steuerkolbens und einer in die Ventilkammer mündenden Durchgangsbohrung, die in einer am Steuerkolben angeordneten Kolbenstange vorgesehen ist. Das Ventil wird durch einen am Übergang zwischen dem Innenraum und der Durchgangsbohrung angeordneten Ventilsitz und einen durch eine Druckfeder in Richtung des Ventilsitzes beaufschlagten Ventilteller gebildet.

Im Inneren der Durchgangsbohrung ist ein Stößel angeordnet, der sich mit einem Ende auf dem federbelasteten Ventilteller im Inneren des Steuerkolbens und mit dem anderen Ende auf einem durch eine Druckfeder in Schließrichtung beaufschlagten Schließorgan des Entlüftungsventils abstützt. Die Druckfedern zur Beaufschlagung des Ventiltellers im Inneren des Steuerkolbens und die Druckfeder zur Beaufschlagung des Entlüftungsventils sind derart ausgelegt, daß zunächst das Entlüftungsventil öffnet, bevor das Ventil zur Überbrückung der Düse im Inneren des Steuerkolbens öffnet. Dies kann auch dadurch erreicht werden, daß das Schließorgan des Entlüftungsventils nach einer vorbestimmten Öffnung gegen einen Anschlag fährt, so daß der Stößel bei weiterer Axialverschiebung des Steuerkolbens diesem nicht mehr folgen kann und das Ventil im Inneren des Steuerkolbens in Öffnungsrichtung bewegt.

An der Außenseite des Stößels sind zweckmäßigerweise Abflachungen vorgesehen, die gewährleisten, daß die über die Düse oder das geöffnete Ventil strömende Druckluft in den Ventilraum gelangen kann. Der Stößel kann jedoch auch mit einem Spiel innerhalb der Durchgangsbohrung geführt sein, so daß die Druckluftverbindung über den ringförmigen Zwischenraum zwischen Stößelaußenseite und der Innenwandung der Durchgangsbohrung gewährleistet ist.

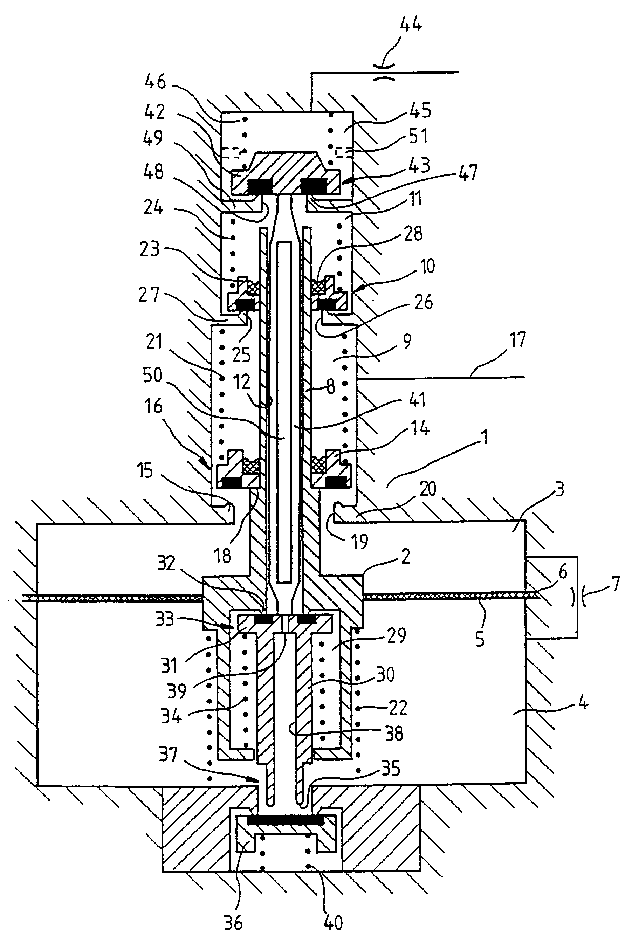

Weitere Vorteile und Besonderheiten der Erfindung ergeben sich aus der folgenden Beschreibung eines bevorzugten Ausführungsbeispiels anhand der Zeichnung.

Die in der Zeichnung schematisch dargestellte Steuereinrichtung umfaßt einen innerhalb eines Gehäuses 1 axialverschiebbaren, federbelasteten Steuerkolben 2, der im Inneren des Gehäuses 1 eine Druckkammer 3 von einer Steuerkammer 4 abtrennt. In der gezeigten Ausführung ist der Steuerkolben 2 als Membrankolben ausgebildet, dessen biegsame Druckmembran 5 an ihrem äußeren Rand 6 im Gehäuse 1 festgelegt ist. Der Steuerkolben 2 weist auf der Seite der Druckkammer 3 und der Seite der Steuerkammer 4 im wesentlichen gleich große Wirkflächen auf, über die der Steuerkolben 2 einerseits durch den in der Druckkammer 3 herrschenden Druck und andererseits durch den Druck in der Steuerkammer 4 beaufschlagt ist. Über eine Drossel 7 ist die Druckkammer 3 mit der Steuerkammer 4 verbunden. Der Steuerkolben 2 enthält eine durch die Druckkammer 3 verlaufende Kolbenstange 8, die einen an die Druckkammer 3 angrenzenden Ventilraum 9 durchsetzt und in eine durch ein Rückventil 10 von dem Ventilraum 9 abgetrennte Ventilkammer 11 hineinragt. Die Kolbenstange 8 weist eine Durchgangsbohrung 12 auf.

Innerhalb des Ventilraums 9 ist an der Kolbenstange 8 ein Ventilelement 14 festgelegt, das zusammen mit einem gehäusefesten Ventilsitz 15 ein Ventil 16 zur Steuerung der Druckluftverbindung zwischen dem mit einer Hauptluftleitung 17 verbundenen Ventilraum 9 und der Druckkammer 3 bildet. Das Ventilelement 14 ist ein ringförmiger Ventilteller, der auf einer Schulter 18 am Außenumfang der Kolbenstange 8 sitzt. Der Ventilsitz 15 umgibt eine von der Kolbenstange 8 durchragte Öffnung 19 in einer Trennwand 20 zwischen dem Ventilraum 9 und der Druckkammer 3. Im Inneren des Ventilraums 9 ist eine Druckfeder 21 angeordnet, die das Ventilelement 14 in Richtung des Ventilsitzes 15 und somit in Schließrichtung des Ventils 16 beaufschlagt. In der Steuerkammer 4 ist eine Druckfeder 22 angeordnet, die den Steuerkolben 2 in Öffnungsrichtung des Ventils 16 beaufschlagt.

Das Rückventil 10 wird durch einen innerhalb der Ventilkammer 11 an der Außenseite der Kolbenstange 8 verschiebbar geführten Ventilring 23 gebildet, der durch eine Druckfeder 24 gegen einen gehäusefesten Ventilsitz 25 gedrückt wird. Der gehäusefeste Ventilsitz 25 umgibt eine von der Kolbenstange 8 durchragte Öffnung 26 in einer Trennwand 27 zwischen dem Ventilraum 9 und der Ventilkammer 11. Über einen Dichtungsring 28 ist der Ventilring 23 gegenüber der Kolbenstange 8 abgedichtet.

Im Inneren des Steuerkolbens 2 ist ein an die Durchgangsbohrung 12 angrenzender Innenraum 29 ausgebildet, der mit der Steuerkammer 4 in Verbindung steht. In dem Innenraum 29 ist ein federbelasteter Ventilstößel 30 axial verschiebbar angeordnet. An einem Ende des Ventilstößels 30 ist ein Ventilteller 31 angeformt, der zusammen mit einem Ventilsitz 32 im Inneren des Steuerkolbens 2 ein Ventil 33 zur Steuerung der Druckluftverbindung zwischen dem Innenraum 29 und der in die Ventilkammer 11 ausmündenden Durchgangsbohrung 12 im Inneren der Kolbenstange 8 bildet. Der Ventilteller 31 wird durch eine im Innenraum 29 angeordnete Druckfeder 34 in Richtung auf den Ventilsitz 32 beaufschlagt. Das andere Ende des Ventilstößels 30 ragt aus dem Innenraum 29 in die Steuerkammer 4 und weist an der Stirnseite einen ringförmigen Ventilsitz 35 auf, der mit einem federbelasteten Ventilteller 36 ein Ventil 37 zur Steuerung der Druckluftverbindung zwischen der Steuerkammer 4 und dem Ventilraum 11 über eine Durchgangsbohrung 38 im Ventilstößel 30 und die Durchgangsbohrung 12 in der Kolbenstange 8 bildet. In der Durchgangsöffnung 38 im Ventilstößel 30 ist eine Düse 39 vorgesehen.

In der in der Zeichnung dargestellten Mittelstellung des Steuerkolbens 2 ist der ringförmige Ventilsitz 35 des Ventilstößels 30 von dem Ventilteller 36 beabstandet, so daß das Ventil 37 unter Bildung einer Druckluftverbindung zwischen der Steuerkammer 4 und der Durchgangsöffnung 38 geöffnet ist. In dieser Stellung besteht eine Druckluftverbindung von der Steuerkammer 4 über das geöffnete Ventil 37, die mit der Düse 39 versehene Durchgangsöffnung 38 und die Durchgangsbohrung 12 zum Ventilraum 11.

Wenn der über den Steuerkolben 2 betätigte Ventilstößel 30 mit seinem Ventilsitz 35 zur Anlage auf dem durch eine Feder 40 beaufschlagten Ventilteller 36 gelangt, schließt das Ventil 37, so daß die Verbindung zwischen der Steuerkammer 4 und der Durchgangsöffnung 38 und damit die Druckluftverbindung von der Steuerkammer 4 zur Ventilkammer 11 im Inneren des Steuerkolbens 2 unterbrochen ist.

Innerhalb der Durchgangsbohrung 12 in der Kolbenstange 8 ist ein Stößel 41 verschiebbar angeordnet, der sich mit einem Ende auf dem federbelasteten Ventilteller 31 und mit dem anderen Ende auf einem federbelasteten Schließorgan 42 eines Entlüftungsventils 43 zur Steuerung der Druckluftverbindung zwischen der Ventilkammer 11 und einer über eine Entlüftungsdüse 44 mit der Atmosphäre verbundenen Entlüftungskammer 45 abstützt. Das durch den Stößel 41 betätigte Schließorgan 42 ist in der Entlüftungskammer 45 angeordnet und wird durch eine Druckfeder 46 in Richtung eines Ventilsitzes 47 gedrückt, der um eine von dem Stößel 41 durchragte Öffnung 48 in einer Trennwand 49 zwischen der Ventilkammer 11 und der Entlüftungskammer 44 ausgebildet ist.

Zur Gewährleistung einer ständigen Verbindung über die Durchgangsbohrung 12 innerhalb der Kolbenstange 8 weist der Stößel 41 seitliche Abflachungen 50 auf, über die die Druckluft zwischen der Außenseite des Stößels 41 und der Innenwandung der Durchgangsbohrung 12 strömen kann.

Die Funktionsweise der erfindungsgemäßen Steuereinrichtung wird im folgenden anhand des in der Zeichnung dargestellten Ausführungsbeispiels erläutert:

Zum Befüllen der Steuereinrichtung mit Druckluft wird dem Ventilraum 9 Druckluft aus der Hauptluftleitung 17 zugeführt. Die Druckluft gelangt über das Ventil 16 in die Druckkammer 3 und von dort über die Drossel 7 in die Steuerkammer 4. Wenn sich der Druck in der Steuerkammer 4 infolge der Drossel 7 langsamer als in der Druckkammer 3 aufbaut, stellt sich eine Druckdifferenz ein, durch die der Steuerkolben 2 in Richtung der Steuerkammer 4 entgegen der Wirkung der Druckfeder 22 bewegt wird. Über das vom Steuerkolben 2 betätigte Ventil 16 wird die Druckluftverbindung zwischen dem Ventilraum 9 und der Druckkammer 3 derart gesteuert, daß die Druckdifferenz zwischen der Druckkammer 3 und der Steuerkammer 4 auf einem vom Hauptleitungsdruck unabhängigen, konstanten Wert gehalten wird. Wenn der Druck in dem mit der Hauptluftleitung 17 verbundenen Ventilraum 9 ansteigt, bewegt sich das durch den Steuerkolben 2 betätigte Ventil 16 in Schließrichtung und verringert dabei den Durchgang vom Ventilraum 9 zur Druckkammer 3 so weit, bis der Druck in der Druckkammer gesenkt und die Druckschwankung wieder korrigiert ist. Durch die konstantgehaltene Druckdifferenz an der Drossel 7 ist auch der Volumenstrom über diese Drossel konstant, so daß auf diese Weise eine vom Hauptleitungsdruck unabhängige gleichmäßige Befüllung der Steuerkammer 4 erreicht wird.

Wenn die Druckdifferenz an der Drossel 7 beim Befüllen der Steuerkammer 4 von dem durch den Steuerkolben 2 betätigten Ventil 16 konstantgehalten wird, ist der Ventilsitz 35 gegen den Ventilteller 36 angedrückt, so daß das Ventil 37 geschlossen und die Verbindung zwischen der Steuerkammer 4 und der Ventilkammer 11 über die Düse 39 unterbrochen ist.

Die Geschwindigkeit, mit der die Steuerkammer 4 befüllt wird, hängt von der Drossel 7 und der an der Drossel vorliegenden Druckdifferenz ab.

Sobald sich ein Druckausgleich auf beiden Seiten der Membrane 5 einstellt, nimmt der Steuerkolben 2 die in der Zeichnung dargestellte Mittellage ein. In dieser Lage ist das Ventil 16 geöffnet, so daß eine Verbindung zwischen dem Ventilraum 9 und der Druckkammer 3 besteht. Das Ventil 37 ist ebenfalls geöffnet, während das Ventil 33 geschlossen ist, so daß die Steuerkammer 4 über die Düse 39 im Ventilstößel 30 und über die Durchgangsbohrung 12 in der Kolbenstange 8 mit der Ventilkammer 11 in Verbindung steht. In der Mittellage des Steuerkolbens 2 ist außerdem das über den Stößel 41 betätigte Entlüftungsventil 43 geschlossen, so daß die Ventilkammer 11 keine Verbindung zur Atmosphäre aufweist.

Bei einer langsamen Druckabsenkung in der Hauptluftleitung 17 kann die Druckluft aus der Steuerkammer 4 über die Drossel 7 in die Druckkammer 3 und weiter durch das offene Ventil 16 in die Hauptluftleitung strömen, ohne daß sich der Steuerkolben 2 verschiebt.

Wenn zum Bremsen der Druck in der Hauptluftleitung 17 abgesenkt wird, und der Druck in der Druckkammer 3 über das offene Ventil 16 schneller absinkt, als der Druck in der Steuerkammer 4 über die Drossel 7 sinken kann, stellt sich eine Druckdifferenz zwischen der Druckkammer 3 und der Steuerkammer 4 ein. Reicht diese Druckdifferenz zur Überwindung der durch die Druckfedern 21 und 46 entgegen der Druckfeder 22 auf den Steuerkolben 2 ausgeübten Kraft aus, verschiebt sich der Steuerkolben 2 in Richtung der Druckkammer 3 und öffnet über den Stößel 41 das Entlüftungsventil 43. Die Druckfeder 34 des Ventils 33 ist stärker als die Druckfeder 46 des Entlüftungsventils 43, so daß zunächst das Entlüftungsventil 43 vollständig geöffnet und erst dann das Ventil 33 geöffnet wird.

Durch den mit der Öffnung des Entlüftungsventils 43 verbundenen Druckabbau in der Ventilkammer 11 öffnet das Rückventil 10 gegen die Kraft der Druckfeder 24, so daß der Durchgang von dem Ventilraum 9 zur Ventilkammer 11 geöffnet ist. Über das geöffnete Rückventil 10, das Entlüftungsventil 43 und die Entlüftungsdüse 44 wird aus der Hauptluftleitung Druckluft abgezapft.

Parallel hierzu wird die Steuerkammer 4 über das geöffnete Ventil 37, die Düse 39 im Ventilteller 31 des Ventilstößels 30, den Durchgang im Inneren des Steuerkolbens 2, die Ventilkammer 11, das geöffnete Entlüftungsventil 43 und die Entlüftungsdüse 44 zur Atmosphäre hin entlüftet.

Um einen zu starken Druckanstieg in der Steuerkammer 4 gegenüber der Druckkammer 3 zu vermeiden, öffnet das Ventil 33 bei einer vorbestimmten Verschiebung des Steuerkolbens 2 in Richtung der Druckkammer 3, so daß sich der Druck in der Steuerkammer 4 ungedüst mit dem Druck im Ventilraum 11 ausgleichen kann.

Die verspätete Öffnung des Ventils 33 gegenüber dem Entlüftungsventil 43 kann dadurch erreicht werden, daß die Druckfeder 34 stärker als die Druckfeder 46 ist. Es kann jedoch auch innerhalb der Entlüftungskammer 45 ein gestrichelt dargestellter Anschlag 51 vorgesehen sein, gegen den das vom Stößel 41 betätigte Schließorgan 42 nach einer vorgegebenen Axialverschiebung anstößt. Bei einer weiteren Auslenkung des Steuerkolbens 2 kann der Stößel 41 nicht mehr dem Steuerkolben 2 folgen, wodurch der Stößel 41 gegen den Ventilteller 31 gedrückt wird und diesen vom Ventilsitz 32 abhebt.

Falls der Luftdruck in der Hauptluftleitung 17 schneller als in der Steuerkammer 4 absinkt, schließt das in Schließrichtung durch die Druckfeder 24 beaufschlagte Rückventil 10, wodurch keine weitere Entlüftung der Hauptluftleitung 17 über das Rückventil 10 erfolgt.

Wenn der Luftdruck in der Hauptluftleitung 17 langsamer absinkt, als die Steuerkammer 4 über die Düse 44 entlüftet wird, so verschiebt sich der Steuerkolben 2 in Richtung der Steuerkammer 4, wodurch die Entlüftung mit Hilfe des Ventils 33 so gedrosselt wird, daß die Entlüftung der Steuerkammer 4 der Druckabsenkung in der Hauptluftleitung entspricht. Das Entlüftungsventil 43 bleibt voll geöffnet, der Luftdruck in der Ventilkammer 11 sinkt und die Hauptluftleitung 17 wird über den Ventilraum 9, das geöffnete Rückventil 10, die Ventilkammer 4 und die Düse 44 zur Atmosphäre hin entlüftet.

Sobald der Druck in der Hauptluftleitung konstantgehalten wird und ein Druckausgleich zwischen der Druckkammer 3 und der Steuerkammer 4 erfolgt ist, befindet sich der Steuerkolben 2 wieder in der gezeigten Mittellage, in der das Entlüftungsventil 42 geschlossen und die Verbindung der Hauptluftleitung und der Steuerkammer 4 mit der Atmosphäre unterbrochen ist.

Zum Lösen der Bremse wird der Druck in der Hauptluftleitung erhöht, wobei die Steuerkammer mit Druckluft aufgefüllt wird, wie dies bereits vorstehend beschrieben wurde. Bei geringer Lösestufe oder langsamer Druckerhöhung in der Hauptluftleitung wird das Ventil 16 nicht geschlossen, so daß ein langsamer Druckausgleich zwischen der Hauptluftleitung 17 und der Steuerkammer 4 über die Drossel 7 erfolgen kann.

## Patentansprüche

1. Steuereinrichtung für eine Druckluftbremse, insbesondere von Schienenfahrzeugen, mit
- einem axial beweglichen, federbelasteten Steuerkolben (2), dessen Wirkflächen einerseits durch den Druck in einer mit einer Hauptluftleitung (17) verbundenen Druckkammer (3) und andererseits durch den Druck in einer mit der Druckkammer (3) über eine Drossel (7) verbundenen Steuerkammer (4) beaufschlagbar sind, dadurch gekennzeichnet, daß sie
- einem durch den Steuerkolben (2) betätigbaren Ventil (16) zur Steuerung der Befüllung der Steuerkammer (4) unabhängig vom Druck in der Hauptluftleitung (17),
- einer durch den Steuerkolben (2) betätigbaren Ventilanordnung (33, 37) zur Steuerung der Druckluftverbindung zwischen der Steuerkammer (4) und einer durch ein Rückventil (10) zur Hauptluftleitung (17) hin absperrbaren Ventilkammer (11), und
- einem durch den Steuerkolben (14) betätigbaren Entlüftungsventil (43) zur Entlüftung der Ventilkammer (11) und der Hauptluftleitung (17) über das Rückventil (10) umfasst.

2. Steuereinrichtung nach Anspruch 1, dadurch gekennzeichnet, daß das Ventil (16) durch einen Ventilsitz (15) zwischen der Druckkammer (3) und einem mit der Hauptluftleitung (17) verbundenen Ventilraum (9) und einen durch eine Druckfeder (21) in Richtung des Ventilsitzes (15) beaufschlagten Ventilteller (14) gebildet wird, der innerhalb des Ventilraums (9) an einer Kolbenstange (8) des Steuerkolbens (2) abgestützt ist.

3. Steuereinrichtung nach Anspruch 1 oder 2, dadurch gekennzeichnet, daß die Ventilanordnung (33, 37) ein Ventil (37) zur Steuerung der Druckluftverbindung zwischen der Steuerkammer (4) und der Ventilkammer (11) über eine Düse (39) und ein Ventil (33) umfaßt, das bei einer vorgegebenen Axialverschiebung des Steuerkolbens (2) in Öffnungsstellung geht und die Düse (39) überbrückt.

4. Steuereinrichtung nach Anspruch 3, dadurch gekennzeichnet, daß das Ventil (33) die Druckluftverbindung zwischen einem mit der Steuerkammer (4) in Verbindung stehenden Innenraum (29) im Steuerkolben (2) und einer in die Ventilkammer (11) mündenden Durchgangsbohrung (12) in der am Steuerkolben (2) angeordneten Kolbenstange (8) steuert.

5. Steuereinrichtung nach Anspruch 4, dadurch gekennzeichnet, daß das Ventil (33) durch einen am Übergang zwischen dem Innenraum (29) und der Durchgangsbohrung (12) gebildeten Ventilsitz (32) und einen durch eine Druckfeder (34) in Richtung des Ventilsitzes (32) beaufschlagten Ventilteller (31) gebildet wird.

6. Steuereinrichtung nach Anspruch 5, dadurch gekennzeichnet, daß im Inneren der Durchgangsbohrung (12) ein Stößel (41) verschiebbar angeordnet ist, der sich mit einem Ende auf dem federbelasteten Ventilteller (31) und mit dem anderen Ende auf einem durch eine Druckfeder (45) in Schließrichtung beaufschlagten Schließorgan (42) des Entlüftungsventils (43) abstützt.

7. Steuereinrichtung nach Anspruch 6, dadurch gekennzeichnet, daß die den Ventilteller (31) beaufschlagende Druckfeder (34) stärker als die auf das Schließorgan (42) wirkende Druckfeder (45) ist.

8. Steuereinrichtung nach einem der Ansprüche 6 oder 7, dadurch gekennzeichnet, daß an dem Stößel (41) seitliche Abflachungen (50) ausgebildet sind.

9. Steuereinrichtung nach einem der Ansprüche 5 bis 8, dadurch gekennzeichnet, daß der Ventilteller (31) an der einen Stirnseite eines im Innenraum (29) des Steuerkolbens (2) axial beweglichen Ventilstößels (30) angeordnet ist und daß am anderen Ende des Ventilstößels ein Ventilsitz (35) gebildet ist, der mit einem federbelasteten Ventilteller (36) das Ventil (37) bildet.

## Claims

1. Controller for a compressed-air brake, in particular for rail vehicles, having
- an axially movable, spring-loaded control piston (2), the operative surfaces of which can be acted upon, on the one hand, by the pressure in a pressure chamber (3) connected to a main air line (17) and, on the other hand, by the pressure in a control chamber (4) connected to the pressure chamber (3) by way of a throttle (7), characterized in that it comprises
- a valve (16) which can be actuated by the control piston (2) and serves to control the filling of the control chamber (4) independently of the pressure in the main air line (17),
- a valve arrangement (33, 37) which can be actuated by the control piston (2) and serves to control the compressed-air connection between the control chamber (4) and a valve chamber (11) capable of being shut off from the main air line (17) by a non-return valve (10), and
- a vent valve (43) which can be actuated by the control piston (14) [sic] and serves to vent the valve chamber (11) and the main air line (17) by way of the non-return valve (10).

2. Controller according to Claim 1, characterized in that the valve (16) is formed by a valve seat (15) between the pressure chamber (3) and a valve space (9) connected to the main air line (17), and a valve disc (14) which is urged in the direction of the valve seat (15) by a compression spring (21) and supported inside the valve space (9) on a piston rod (8) of the control piston (2).

3. Controller according to Claim 1 or 2, characterized in that the valve arrangement (33, 37) comprises a valve (37) for controlling the compressed-air connection between the control chamber (4) and the valve chamber (11) by way of a nozzle (39), and a valve (33) which, in the event of a preset axial displacement of the control piston (2), moves into the open position and covers the nozzle (39).

4. Controller according to Claim 3, characterized in that the valve (33) controls the compressed-air connection between an inner space (29) in connection with the control chamber (4) and situated in the control piston (2) and a through-bore (12) opening into the valve chamber (11) and situated in the piston rod (8) arranged on the control piston (2).

5. Controller according to Claim 4, characterized in that the valve (33) is formed by a valve seat (32) formed at the transition between the inner space (29) and the through-bore (12) and a valve disc (31) urged in the direction of the valve seat (32) by a compression spring (34).

6. Controller according to Claim 5, characterized in that a push rod (41) is displaceably arranged within the through-bore (12), this push rod being supported by one end on the spring-loaded valve disc (31) and by the other end on a closing member (42), urged in the closing direction by a compression spring (45), of the vent valve (43).

7. Controller according to Claim 6, characterized in that the compression spring (34) urging the valve disc (31) is stronger than the compression spring (45) acting on the closing member (42).

8. Controller according to Claim 6 or 7, characterized in that lateral flattened areas (50) are formed on the push rod (41).

9. Controller according to one of Claims 5 to 8, characterized in that the valve disc (31) is arranged at one end face of a valve lifter (30) axially movable in the inner space (29) of the control piston (2) and in that a valve seat (35), which together with a spring-loaded valve disc (36) forms the valve (37), is formed at the other end of the valve lifter.

## Revendications

1. Dispositif de commande pour un frein à air comprimé, en particulier pour véhicules montés sur rails, avec
- un piston de commande à déplacement axial, sollicité par un ressort (2) dont les faces actives sont sollicitées d'une part par la pression dans une chambre de pression (3) raccordée par une conduite d'air principale (17) et d'autre part par la pression dans une chambre de commande (4) raccordée à la chambre de pression (3) par un papillon (7), caractérisé en ce que le dispositif comprend
une soupape (16) pouvant être actionnée par le piston de commande (2) pour la commande du remplissage de la chambre de commande (4) indépendamment de la pression dans la conduite d'air principale (17)
- un système de soupape (33, 37) pouvant être actionné par le piston de commande (2) pour la commande de la communication d'air comprimé entre la chambre de commande (4) et une chambre de soupape (11) pouvant être fermée par une soupape de retour (10) vers la conduite d'air principale (17) et
- une soupape de purge d'air (43) pouvant être actionnée par le piston de commande (14) pour la purge d'air de la chambre de soupape (11) et la conduite d'air principale (17) par la soupape de retour (10).

2. Dispositif de commande selon la revendication 1, caractérisée en ce que la soupape (16) est formée par un siège de soupape (15) entre la chambre de pression (3) et un logement de soupape (9) raccordée à la conduite d'air principale (17) et une tête de soupape (14) sollicitée par un ressort de compression (21) dans la direction du siège de soupape (15), tête de soupape qui est supportée à l'intérieur du logement de soupape (9) sur une tige de piston (8) du piston de commande (2).

3. Dispositif de commande selon la revendication 1 ou 2, caractérisé en ce que le système de soupape (33, 37) comprend une soupape (37) pour la commande de la communication d'air comprimé entre la chambre de commande (4) et la chambre de soupape (11) par l'intermédiaire d'une tuyère (39) et d'une soupape (33) qui lors d'un déplacement axial prédéterminé du piston de commande (2) vient en position d'ouverture et relie la tuyère (39).

4. Dispositif de commande selon la revendication 3, caractérisée en ce que la soupape (33) commande la communication d'air comprimé entre un logement interne (29) en communication avec la chambre de commande (4) dans le piston de commande (2) et un alésage de passage (12) débouchant dans la chambre de soupape (11) dans la tige de piston (8) disposée sur le piston de commande (2).

5. Dispositif de commande selon la revendication 4, caractérisé en ce que la soupape (33) est formée par un siège de soupape (32) formé sur la transition entre le logement interne (29) et l'alésage traversant (12) et une tête de soupape (31) sollicitée par un ressort de compression (34) par la direction du siège de soupape (32).

6. Dispositif de commande selon la revendication 5, caractérisé en ce qu'à l'intérieur de l'alésage traversant (12) est disposé un poussoir (41) de façon déplaçable qui s'appuie par une extrémité sur la tête de soupape (31) sollicité par un ressort et par l'autre extrémité sur un organe de fermeture (42) sollicité par un ressort de compression (45) dans la direction de fermeture, organe de fermeture (42) de la soupape de purge d'air (43).

7. Dispositif de commande selon la revendication 6, caractérisé en ce que le ressort de compression (34) sollicitant la tête de soupape (31) est d'une puissance supérieure au ressort de compression (45) agissant sur l'organe de fermeture (42).

8. Dispositif de commande selon une des revendications 6 ou 7, caractérisé en ce que sur le poussoir (41) sont formés des méplats latéraux (50).

9. Dispositif de commande selon une des revendications 5 à 8, caractérisé en ce que la tête de soupape (31) est disposée sur un côté frontal d'un poussoir de soupape se déplaçant axialement dans le logement interne (29) du piston de commande (2) et en ce que sur l'autre extrémité du poussoir de soupape est formé un siège de soupape (35) qui avec une tête de soupape (36) sollicité par ressort forme la soupape (37).
